# EUROPÄISCHE PATENTSCHRIFT

(11) **EP 2 067 193 B1**
(45) Veröffentlichungstag und Bekanntmachung des Hinweises auf die Patenterteilung: **01.05.2013**
(21) Anmeldenummer: 07801234.1
(22) Anmeldetag: 11.08.2007
(51) Int. Cl.: H01M 6/38, H01M 2/16, H01M 6/04, H01M 10/04, H01M 2/14

(54) **GALVANISCHES ELEMENT UND VERFAHREN ZUR HERSTELLUNG GALVANISCHER ELEMENTE**
GALVANIC ELEMENT, AND METHODS FOR THE PRODUCTION OF GALVANIC ELEMENTS
ÉLÉMENT GALVANIQUE ET PROCÉDÉ DESTINÉ À RÉALISER DES ÉLÉMENTS GALVANIQUES

(30) Priorität: 11.08.2006 DE 102006038362
(43) Veröffentlichungstag der Anmeldung: 10.06.2009
(73) Patentinhaber: Printechnologics GmbH, 09112 Chemnitz (DE)
(72) Erfinder: Kreutzer André, 09648 Mittweida (DE)
(74) Vertreter: Lange, Sven
(86) Internationale Anmeldenummer: PCT/DE2007/001431
(87) Internationale Veröffentlichungsnummer: WO 2008/019662

(56) Entgegenhaltungen:
- EP-A- 1 469 547
- WO-A-00/11743
- DE-A1- 10 313 006
- DE-U1-202005 019 471
- JP-A- 2 121 383
- US-A1- 2003 008 206

## Beschreibung

Die Erfindung betrifft galvanische Elemente mit wenigstens einem Träger und zwei Elektroden sowie mindestens einem Elektrolyt wenigstens bereichsweise zwischen den Elektroden und Verfahren zur Herstellung von galvanischen Elementen.

Flache galvanische Elemente im Schichtaufbau ohne Separator sind unter anderem durch die Druckschrift US 2004/0209160 mit festem Elektrolyt bekannt. Mit Separatoren versehene galvanische Elemente sind unter anderem durch die Druckschriften US 5,652,043; US 5,811,204, US 2003/0059673 und US 2004/0175624 bekannt. Als Separatoren werden saugfähige und mit Mikroporen versehene Materialien wie Papier eingesetzt. Die Träger mit den Elektroden und der Separator bestehen aus unterschiedlichen Materialien. Ein saugfähiges und poröses Material kann nicht als Träger für die Elektroden und damit nach außen geschlossenem System eingesetzt werden.

Durch die Druckschrift WO 00/11743 A ist eine gedruckte elektrochemische Zelle mit verzögerter Aktivierung bekannt. Diese weist einen Separator sowie zwei Träger für zwei Elektrodenschichten auf. Zusätzlich ist ein mikroverkapselter Elektrolyt vorhanden, der durch ein Klebemittel in Position gehalten wird. Der Elektrolyt ist durch eine mechanische Aktivierung freisetzbar. Anstelle des mikroverkapselten Elektrolyten ist auch eine zerreißbare Schicht einsetzbar. Die Träger können aus Polyester oder PET bestehen.

Eine Zelle mit verzögerter Aktivierung ist auch durch die Druckschrift DE 103 13 006 A1 bekannt. Diese besitzt Elektrodenträger, die die Kollektoren sowie die Anoden- und Kathodenschicht tragen. Zwischen den Elektroden befindet sich ein Elektrolytraum. Die Aktivierung der Zelle erfolgt durch Ausübung eines mechanischen Druckes auf ein Elektrolytreservoir, so dass das Elektrolyt in den Elektrolytraum gelangt.

Durch die Druckschrift EP 1 469 547 A1 ist eine Dünnfilmbatterie bekannt, die aus Elektroden und einem Separator sowie Begrenzungsblöcken besteht. Ein gefalteter Bleibändersatz ist durch die Druckschrift DE 20 2005 019 471 U1 bekannt, bei dem ein positiver und ein negativer Bleigittersatz samt Separator gefaltet wird. Negativ und positiv pastierte Bleigitterbänder samt Separator werden zu einem Bleibändersatz für Bleisäurebatterien gefaltet.

Durch die Druckschrift US 2003/008206 A1 ist eine Lithiumbatterie bekannt, die aus einer Vielzahl von aufeinander gestapelten Zellen besteht. Diese Zellen sind dabei durch einen Separatorfilm miteinander verbunden. Dieser Film kann auch als Träger der Elektroden fungieren. Der Separatorfilm kann dazu aus Polypropylen oder Polyethylen bestehen.

Durch die Druckschrift JP 021.21383 ist eine Batterie bekannt, die in eine Leiterplatte eingebaut ist. Die Leiterplatte dient dabei sowohl als Separator als auch als Träger für Halbleiterelemente.
i. Der in Patentansprüchen 1 und 5 angegebenen Erfindung liegt die Aufgabe zugrunde, einfach aufgebaute galvanische Elemente zu schaffen und ökonomisch günstig herzustellen. Diese Aufgabe wird mit den in den Patentansprüchen 1 und 5 aufgeführten Merkmalen gelöst. Die galvanischen Elemente mit wenigstens einem Träger und zwei Elektroden sowie mindestens einem Elektrolyt wenigstens bereichsweise zwischen den Elektroden und die Verfahren zur Herstellung von galvanischen Elementen zeichnen sich insbesondere durch ihren einfachen Aufbau aus und sind ökonomisch günstig herzustellen. Dazu ist zwischen den Elektroden wenigstens ein Bereich eines plattenförmigen Körpers mit eingebrachten Öffnungen als Separator angeordnet. Damit besteht das galvanische Element aus zwei Trägern und zwei Elektroden sowie mindestens einem Elektrolyt wenigstens bereichsweise zwischen den Elektroden, wobei zwischen den Elektroden wenigstens ein Bereich eines plattenförmigen Körpers mit eingebrachten Öffnungen als Separator angeordnet ist, wobei
   i. der plattenförmige Körper und die Träger für die Elektroden ein flexibler Körper sind, dass nacheinander ein erster Bereich der erste Träger, ein zweiter Bereich der zweite Träger und ein dritter Bereich der Separator jeweils des flexiblen Körpers ist, dass sich die Elektroden auf einer Seite des flexiblen Körpers befinden und dass der dritte Bereich als Separator in Richtung des zweiten Bereiches mit der Elektrode und der erste Bereich in Richtung des zweiten Bereiches mit der Elektrode, dem Separator und dem Elektrolyt geklappt, gefaltet, gefalzt, umgebogen oder umgeschlagen sind, wobei
   ii. der flexible Körper zwischen den Elektroden wenigstens einen Durchbruch so aufweist, dass im geklappten, gefalteten, gefalzten, umgebogenen oder umgeschlagenen Zustand ein Bereich der Elektrode des zweiten Bereiches nicht bedeckt ist und dass der erste Bereich mit der Elektrode den geklappten, gefalteten, gefalzten, umgebogenen oder umgeschlagenen dritten Bereich überragt, so dass ein Bereich dieser Elektrode nicht bedeckt ist.

Die galvanischen Elemente bestehen damit im Wesentlichen aus zwei Elektroden, die durch eine elektronen- und ionenleitende Lösung als Elektrolyt getrennt sind. Bei der Entladung fließt der mit der chemischen Reaktion verbundene Elektronenstrom über den die Elektroden angeschlossenen Verbraucher und verrichtet dabei elektrische Arbeit. Die Elektroden selbst bestehen aus einer oder mehreren Schichten in Form eines stromableitenden Teiles und eines chemisch aktiven Teiles.

Die Anordnung der Elektroden kann sowohl vertikal zueinander als auch in einer Ebene nebeneinander in dem geschlossenen galvanischen Element sein. Die Elektroden bestehen dazu zum Beispiel bekannterweise aus Zink und Mangan(IV)-oxid.

Die Elektroden können aber auch als separate Elektroden aufgebracht sein. Das ist dabei zum Beispiel eine Folie oder eine Textilie jeweils als Elektrode an sich.

Der Elektrolyt ist flüssig oder pastös. Er ist weiterhin als Masse selbst eingebracht oder befindet sich in wenigstens einem Behältnis oder in separaten Kugeln. Das Behältnis ist zum Beispiel ein Kissen. Das Behältnis und die Kugeln sind so ausgebildet, dass diese geöffnet werden können. Im geschlossenen Zustand schützt das Behältnis dabei vor dem Austrocknen. Insbesondere die Kugeln mit dem Elektrolyt können sich dabei unter anderem auch neben den Elektroden befinden, wobei beim Öffnen durch Aufplatzen der Elektrolyt zwischen die Elektroden gelangt. Eine derartige Realisierung zeichnet sich durch einen besonders flachen Aufbau aus. Die Kugeln können dabei vorteilhafterweise als Schüttgut oder als Endlosmaterial in Form von Blasenfotie direkt bei Herstellung des galvanischen Elements aufgebracht werden. Ein Elektrolyt ist dabei zum Beispiel eine wässrige Zinkchloridlösung. Es ist aber auch möglich den Elektrolyt als Salz und Lösungsmittel separat aufzubringen, wobei erst beim Öffnen durch Aufplatzen eine Vermischung stattfindet und die galvanischen Elemente damit aktiv werden.

Das Öffnen der Kapseln oder des Behältnisses kann durch besonders ausgestaltete Formelemente erleichtert werden. Natürlich können die Behältnisse und Kapseln auch mit vorbestimmten Sollbruchstellen ausgestattet werden.

Ein weiterer Vorteil kann sich durch einen eingefärbten Elektrolyten ergeben, wobei über transparente Bereiche der galvanischen Elemente die Funktion der galvanischen Elemente begutachtet werden kann. Natürlich kann dazu auch oder anstelle ein pH-Wert Indikator vorgesehen werden.

Das Material des Separators zwischen den Elektroden muss nicht porös oder saugfähig sein. Vorteilhafterweise kann damit jede Kunststofffolie zur Realisierung der galvanischen Elemente eingesetzt werden. Natürlich sind auch andere elektrisch nichtleitende Materialien wie zum Beispiel Keramiken, Holz, einem Holzwerkstoff oder Papier als Material des Separators verwendbar.

Ein weiterer Vorteil besteht darin, dass durch die Öffnungen im Separator der Innenwiderstand der Batterie heruntergesetzt wird. Weiterhin sind eine bessere Benetzung der Elektroden mit Elektrolyt und schnellere Formierung der Batterie möglich, da kein poröses Material erst getränkt werden muss. Mit dem Einsatz dieser Materialien ist ein nach außen abgeschlossenes galvanisches Element realisiert.

Insbesondere bei der Verwendung von Kunststofffolie ist es vorteilhafterweise möglich, ein und dasselbe Material als Basisfolie als Träger für die Elektroden einzeln oder in Kombination und/oder zugleich als Separator zu verwenden. Dadurch können auch gefaltete oder gefalzte galvanischen Elemente realisiert werden, wobei Bereiche der galvanischen Elemente geklappte, gefaltete, gefalzte, umgebogene oder umgeschlagene Bestandteile sind.

Dazu werden in wenigstens einem Bereich eines plattenförmigen Körpers als Separator Öffnungen eingebracht. Das erfolgt zum Beispiel durch Bestrahlen mit Laserstrahlen, Lochen, thermischen Lochstechen, Stanzen, Prägen, Walzen, Elektroperforation, elektrischen Durchschlag, Plasmaätzen, Ionenbestrahlung oder nasschemisches Ätzen. Der Separator und/oder die Träger mit darauf angeordneten Elektroden werden mit einem Elektrolyt versehen. Die Elektroden können in Richtung des Separators oder zueinander weisen.

In einer Variante werden dazu auf einem ersten Bereich und einem benachbartem zweiten Bereich eines langgestreckten bahnenförmigen Körpers in Längsrichtung jeweils beabstandet zueinander Schichten wenigstens als die Elektroden aufgebracht. In einem dritten Bereich nach dem ersten und dem zweiten Bereich werden Öffnungen als Separator und zwischen den Elektroden wenigstens ein Durchbruch eingebracht. Auf wenigstens einem Bereich wird ein Elektrolyt aufgebracht. Der dritte Bereich als Separator wird auf dem zweiten Bereich und der erste Bereich wird auf den zweiten Bereich als Separator so geklappt, gefaltet, gefalzt, umgebogen oder umgeschlagen, dass die jeweilige Schicht als Elektrode in Richtung des dritten Bereiches als Separator weist und ein Bereich der Elektrode nicht bedeckt ist und der andere Bereich mit der Elektrode den Bereich als Separator mit dem Elektrolyten überragt, so dass jeweils ein Bereich der Elektroden nicht bedeckt ist.

Der entsprechend dieser Variante jeweils so ausgebildete langgestreckte Körper wird quer zur Längsrichtung in Abschnitte als galvanische Elemente geteilt und die Abschnitte werden an den Schnittkanten durch Verbindungstechnologien verschlossen. Dadurch ist eine sehr ökonomische Herstellung gegeben, die sich für eine Massenfertigung eignet. Es können sehr preisgünstige galvanische Elemente hergestellt werden. Damit können vorteilhafterweise zum Beispiel auch flache galvanische Elemente realisiert werden.

Vorteilhafte Ausgestaltungen der Erfindung sind in den Patentansprüchen 2 bis 4 angegeben.

Der plattenförmige Körper und die Träger für die Elektroden sind ein flexibler Körper. Nacheinander sind ein erster Bereich der erste Träger, ein zweiter Bereich der zweite Träger und ein dritter Bereich der Separator. Die Elektroden befinden sich auf einer Seite des flexiblen Körpers. Weiterhin sind der dritte Bereich als Separater in Richtung des zweiten Bereiches mit der Elektrode und der erste Bereich in Richtung des zweiten Bereiches mit der Elektrode, dem Separator und dem Elektrolyt geklappt, gefaltet, gefalzt, umgebogen oder umgeschlagen. Dadurch weisen die Elektroden in Richtung des Separators.

Weiterhin weist der flexible Körper zwischen den Elektroden wenigstens einen Durchbruch so auf, dass im geklappten, gefalteten, gefalzten, umgebogenen oder umgeschlagenen Zustand ein Bereich der Elektrode des zweiten Bereiches nicht bedeckt ist. Weiterhin überragt der erste Bereich mit der Elektrode den geklappten, gefalteten, gefalzten, umgebogenen oder umgeschlagenen dritten Bereich, so dass ein Bereich dieser Elektrode nicht bedeckt ist. Dadurch ist eine leichte Kontaktierung der galvanischen Elemente möglich. Das stellt eine sehr einfache Realisierung der galvanischen Elemente dar, die ökonomisch günstig herstellbar sind.

Der Separator weist sowohl die Öffnungen als auch wenigstens einen Hohlraum als zu öffnendes oder sich öffnendes Behältnis mit Elektrolyt auf. Die elektrische Arbeit wird damit erst nach dem Öffnen des Behältnisses verrichtet. Die Funktion des galvanischen Elementes beginnt erst mit dem Öffnen des Behältnisses.

Das kann durch die zwei folgenden Varianten realisiert werden. In einer ersten Variante ist das entweder wenigstens ein durch Einwirken einer aus mindestens einem physikalischen Effekt resultierenden Kraft zu öffnender Bereich des Behältnisses oder wenigstens ein durch das Einwirken mindestens eines Stoffes über einen physikalischen und/ oder chemischen Effekt zu öffnender Bereich des Behältnisses.

Das Einwirken des Stoffes kann dabei vorteilhafterweise zu einem Auflösen wenigstens eines Bereiches des Behältnisses führen. Das kann vorzugsweise über eine chemische Reaktion erfolgen, die das Öffnen des Behältnisses zeitlich bestimmt. Darüber hinaus kann das auch über eine andere chemische Reaktion erfolgen, wobei das Behältnis mit einem daraus resultierenden Wirken eines physikalischen Effektes sich öffnet oder geöffnet wird. Das kann zum Beispiel durch eine Druckerhöhung im Inneren des Behältnisses erfolgen, so dass das Behältnis aufplatzt. Das kann auch durch Sollbruchstellen des Behältnisses gezielt erfolgen.

In einer zweiten Variante weist der Separator sowohl die Öffnungen als auch wenigstens einen Hohlraum als Behältnis für Elektrolyt auf, wobei dass vorzugsweise ein durch das Einwirken einer mechanischen Kraft und daraus resultierendem erhöhten Druck zu öffnender Hohlraum ist.

Der Hohlraum kann dabei durch die Wirkung eines mechanischen Drucks geöffnet werden, wobei der Separator aufplatzt oder auch mit geeigneten Mitteln aufgestochen wird, so dass der Elektrolyt an die Elektroden gelangen kann, Dadurch wirkt das galvanische Element erst nach Ausübung dieser mechanischen Kraft. Die elektrische Arbeit wird damit erst nach diesem Zeitpunkt verrichtet.

Der Elektrolyt ist nach der Weiterbildung des Patentanspruchs 2 durch wenigstens einen mit Kleber versehenen Steg begrenzt, so dass ein oder mehrere galvanische Elemente realisiert sind. Dadurch können mehrere galvanische Elemente in Reihe oder parallel geschalten werden. Der Steg selbst oder ein Teil davon können gleichzeitig ein stromableitender Teil sein. Das ist unter anderem eine ein- oder doppelseitig selbstklebende, in mindestens eine Orientierungsrichtung leitfähige Elektrode.

Der flexible Körper ist nach der Weiterbildung des Patentanspruchs 3 ein Teil eines langgestreckten bahnenförmigen Körpers, wobei die Bereiche nebeneinander quer zur Längsrichtung des bahnenförmigen Körpers angeordnet sind, so dass ein quer zur Längsrichtung des bahnenförmigen Körpers abgetrennter Abschnitt des bahnenförmigen Körpers im geklappten, gefalteten, gefalzten, umgebogenen oder umgeschlagenen Zustand ein galvanisches Element oder ein Bestandteil davon ist. Dadurch ist eine Massenfertigung der galvanischen Elemente möglich. Der flexible Körper befindet sich dazu vorteilhafterweise auf Rollen, so dass eine leichte Handhabung während und nach der Realisierung der galvanischen Elemente gegeben ist.

Nach der Weiterbildung des Patentanspruchs 4 ist wenigstens ein weiterer nicht den Separator bildender Bereich des plattenförmigen Körpers ein Bauelementeträger. Dadurch können kompakte aktive elektronische Baugruppen realisiert werden.

Gemäß Patentanspruch 5 betrifft die Erfindung ein Verfahren zur Herstellung galvanischer Elemente, wobei auf einem ersten Bereich und einem benachbartem zweiten Bereich eines langgestreckten bahnenförmigen flexiblen Körpers in Längsrichtung jeweils beabstandet zueinander jeweils mindestens eine Schicht wenigstens als Elektrode aufgebracht wird, dass in einem dritten Bereich nach dem ersten und dem zweiten Bereich Öffnungen als Separator eingebracht werden, dass der dritte Bereich als Separator mit dem Elektrolyt auf dem zweiten Bereich und der erste Bereich auf den zweiten Bereich so geklappt, gefaltet, gefalzt, umgebogen oder umgeschlagen werden, dass die jeweilige Schicht wenigstens als Elektrode in Richtung des dritten Bereiches als Separator weist, dass der so ausgebildete langgestreckte Körper quer zur Längsrichtung in Abschnitte als galvanische Elemente geteilt wird und dass die Abschnitte an den Schnittkanten durch Verbindungstechnologien verschlossen werden.

Günstige Materialien für den langgestreckten bahnenförmigen Körper sind ein Kunststoff, ein Papier oder eine Textilie.

Ausführungsbeispiele der Erfindung sind in den Zeichnungen jeweils prinzipiell dargestellt und werden im folgenden näher beschrieben.

Es zeigen:
Fig. 1 ein durch Klappen, Falten, Falzen, Umbiegen oder Umschlagen realisiertes galvanisches Element (nicht zur Erfindung gehörend)
Fig. 2 ein weiteres durch Klappen, Falten, Falzen, Umbiegen oder Umschlagen realisiertes galvanisches Element.

Nachfolgend werden in den Ausführungsbeispielen die Anordnungen als galvanische Elemente und die Verfahren zu deren Herstellung zusammen näher erläutert.

### 1. Ausführungsbeispiel, nicht zur Erfindung gehörend.

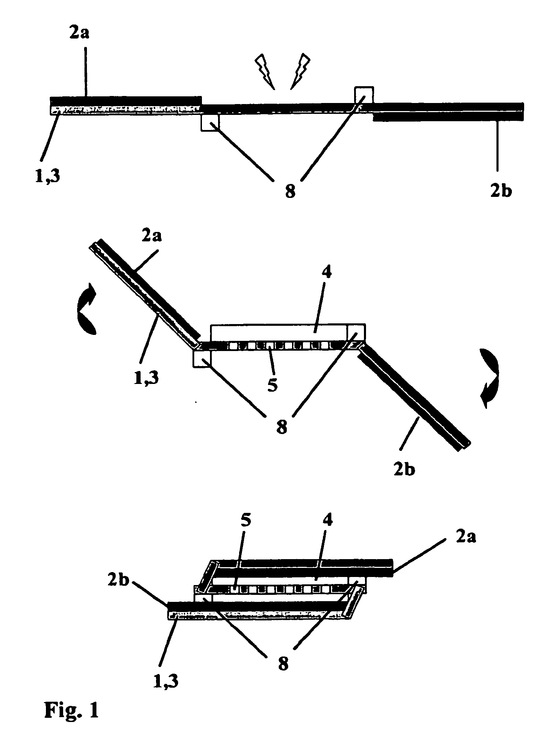

Ein galvanisches Element besteht im Wesentlichen aus zwei Trägern 1a, 1b mit jeweils einer darauf angeordneten Elektrode 2a, 2b, einem Separator 3 und einem Elektrolyt 4. Die Träger 1a, 1b und der Separator 3 sind ein flexibler Körper, der aus einem Kunststoff besteht. Die Fig. 1 zeigt ein durch Klappen, Falten, Falzen, Umbiegen oder Umschlagen realisiertes galvanisches Element in prinzipiellen Darstellungen. Auf einem ersten Bereich eines Körpers 1, 3 wird mindestens eine Schicht wenigstens als Elektrode 2a und auf der gegenüberliegenden Seite des Körpers 1, 3 auf einem dritten Bereich in Längsrichtung mindestens eine weitere Schicht wenigstens als Elektrode 2b aufgebracht. In einem zweiten Bereich zwischen dem ersten und dem dritten Bereich werden Öffnungen 5 eingebracht, so dass der Separator 3 realisiert ist. Auf wenigstens einem Bereich wird der Elektrolyt 4 aufgebracht. Jeweils der erste Bereich und der dritte Bereich werden auf den zweiten Bereich so geklappt, dass die jeweilige Elektrode 2a, 2b in Richtung des zweiten Bereiches als Separator 3 weist.

Zur Verbindung der zu klappenden, faltenden, falzenden, umzubiegenen oder umzuschlagenen Bereiche sind vorteilhafterweise Stege 8 angeordnet. Die Verbindungen mit diesen Stegen 8 basieren auf bekannten Verbindungstechnologien, zum Beispiel Kleben. Im geklappten, gefalteten, gefalzten, umgebogenen oder umgeschlagenen Zustand überragen der erste Bereich mit der Elektrode 2a und der dritte Bereich mit der Elektrode 2b jeweils den zweiten Bereich als Separator 3 mit dem Elektrolyten 4, so dass jeweils der Endbereich der Elektroden 2a, 2b nicht bedeckt ist.

In einer Ausführungsform kann der flexible Körper 1, 3 ein langgestreckter bahnenförmiger Körper mit den ausgebildeten Bereichen des zweiten Ausführungsbeispiels sein. Vorteilhafterweise ist dieser Körper 1, 3 auf einer Rolle aufgewickelt. Nach dem Klappen, Falten, Falzen, Umbiegen oder Umschlagen der Bereiche wird der langgestreckte Körper quer zur Längsrichtung in Abschnitte als galvanische Elemente geteilt. Die Abschnitte werden an den Schnittkanten durch Verbindungstechnologien, zum Beispiel Kleben oder Schweißen, verschlossen.

### 2. Ausführungsbeispiel (erfindungsgemäß)

Ein galvanisches Element besteht im Wesentlichen aus zwei Trägern 1 a, 1 b mit jeweils einer darauf angeordneten Elektrode 2a, 2b, einem Separator 3 und einem Elektrolyt 4. Die Träger 1 a, 1 b und der Separator 3 sind ein flexibler Körper, der aus einem Kunststoff besteht.

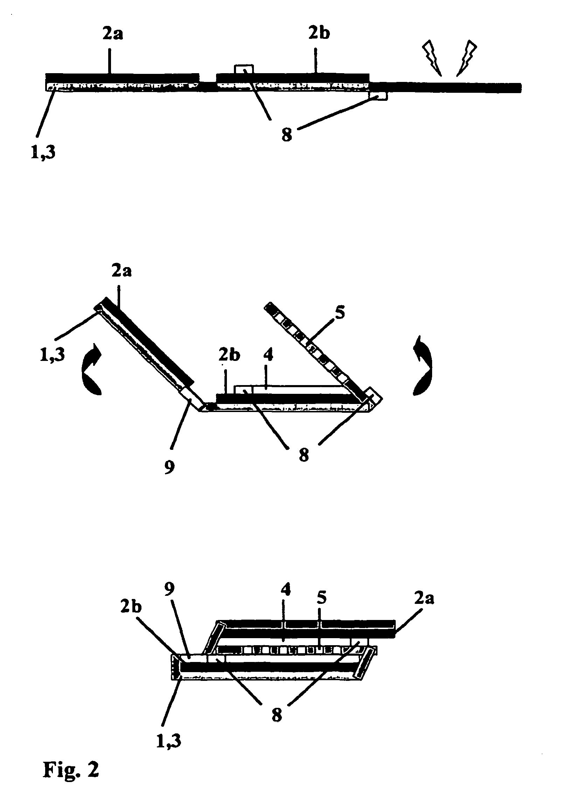

Die Fig. 2 zeigt ein durch Klappen, Falten, Falzen, Umbiegen oder Umschlagen realisiertes galvanisches Element in prinzipiellen Darstellungen.

Auf, einem ersten Bereich und einem benachbarten zweiten Bereich des Körpers 1, 3 wird jeweils mindestens eine Schicht wenigstens als Elektrode 2a, 2b aufgebracht In einem dritten Bereich nach dem ersten und dem zweiten Bereich werden Öffnungen 5 als Separator 3 eingebracht.

Auf wenigstens einem Bereich wird ein Elektrolyt 4 aufgebracht. Der dritte Bereich als Separator 3 wird auf dem zweiten Bereich und der erste Bereich wird auf den zweiten Bereich als Separator 3 so geklappt, dass die jeweilige Elektrode 2a, 2b in Richtung des dritten Bereiches als Separator 3 weist. Zur Verbindung der zu klappenden, faltenden, gefalzenden, umzubiegenen oder umzuschlagenen Bereiche sind vorteilhafterweise Stege 8 angeordnet. Die Verbindungen mit diesen Stegen 8 basieren auf bekannten Verbindungstechnologien, zum Beispiel Kleben.

Der flexible Körper 1, 3 weist zwischen den Elektroden 2a, 2b wenigstens einen Durchbruch 9 so auf, dass im geklappten, gefalteten, gefalzten, umgebogenen oder umgeschlagenen Zustand ein Bereich der Elektrode 2b des zweiten Bereiches nicht bedeckt ist. Weiterhin überragt der erste Bereich mit der Elektrode 2a den geklappten, gefalteten, gefalzten, umgebogenen oder umgeschlagenen dritten Bereich, so dass ein Endbereich dieser Elektrode 2a nicht bedeckt ist. In einer weiteren Ausführungsform des zweiten Ausführungsbeispiels ist der flexible Körper 1, 3 ein langgestreckter bahnenförmiger Körper mit den ausgebildeten Bereichen des dritten Ausführungsbeispiels. Vorteilhafterweise ist dieser Körper 1, 3 auf einer Rolle aufgewickelt. Nach dem Klappen, Falten, Falzen, Umbiegen oder Umschlagen der Bereiche wird der langgestreckte Körper quer zur Längsrichtung in Abschnitte als galvanische Elemente geteilt. Die Abschnitte werden an den Schnittkanten durch Verbindungstechnologien, zum Beispiel Kleben oder Schweißen, verschlossen.

Ein galvanisches Element besteht entsprechend der Ausführungsbeispiele damit im Wesentlichen aus wenigstens einem Träger 1, zwei Elektroden 2a, 2b, einem Separator 3 und einem Elektrolyt 4.

## Patentansprüche

1. Galvanisches Element mit zwei Trägern (1a, 1 b) und zwei Elektroden sowie mindestens einem Elektrolyt wenigstens bereichsweise zwischen den Elektroden, **dadurch gekennzeichnet, dass**
zwischen den Elektroden (2a, 2b) wenigstens ein Bereich eines plattenförmigen Körpers mit eingebrachten Öffnungen (5) als Separator (3)angeordnet ist, wobei
i. der plattenförmige Körper und die Träger (1a, 1b) für die Elektroden (2a, 2b) ein flexibler Körper sind, dass nacheinander ein erster Bereich der erste Träger (1a), ein zweiter Bereich der zweite Träger (1b) und ein dritter Bereich der Separator (3) jeweils des flexiblen Körpers ist, dass sich die Elektroden (2a, 2b) auf einer Seite des flexiblen Körpers befinden und dass der dritte Bereich als Separator (3) in Richtung des zweiten Bereiches mit der Elektrode (2b) und der erste Bereich in Richtung des zweiten Bereiches mit der Elektrode (2b), dem Separator (3) und dem Elektrolyt (4) geklappt, gefaltet, gefalzt, umgebogen oder umgeschlagen sind, wobei
ii. der flexible Körper zwischen den Elektroden (2a, 2b) wenigstens einen Durchbruch (9) so aufweist, dass im geklappten, gefalteten, gefalzten, umgebogenen oder umgeschlagenen Zustand ein Bereich der Elektrode (2b) des zweiten Bereiches nicht bedeckt ist und dass der erste Bereich mit der Elektrode (2a) den geklappten, gefalteten, gefalzten, umgebogenen oder umgeschlagenen dritten Bereich überragt, so dass ein Bereich dieser Elektrode (2a) nicht bedeckt ist.

2. Galvanisches Element nach Patentanspruch 1, **dadurch gekennzeichnet, dass** der Elektrolyt (4) durch wenigstens einen mit Kleber versehenen Steg (8) begrenzt ist, so dass ein galvanisches Element oder mehrere galvanische Elemente realisiert sind, wobei der Steg (8) ein separates Teil oder ein Bestandteil der Elektroden (2a, 2b) ist.

3. Galvanisches Element nach wenigstens einem der Patentansprüche 1 oder 2, **dadurch gekennzeichnet, dass** der flexible Körper ein Teil eines langgestreckten bahnenförmigen Körpers ist, wobei die Bereiche nebeneinander quer zur Längsrichtung des bahnenförmigen Körpers angeordnet sind, so dass ein quer zur Längsrichtung des bahnenförmigen Körpers abgetrennter Abschnitt des bahnenförmigen Körpers im geklappten, gefalteten, gefalzten, umgebogenen oder umgeschlagenen Zustand entweder ein Bestandteil eines galvanischen Elementes oder ein galvanisches Element ist.

4. Galvanisches Element nach Patentanspruch 1, **dadurch gekennzeichnet, dass** wenigstens ein weiterer nicht den Separator (3) bildender Bereich des plattenförmigen Körpers ein Bauelementeträger ist, so dass eine elektronische Baugruppe mit wenigstens einem galvanischen Element realisiert ist.

5. Verfahren zur Herstellung galvanischer Elemente nach Patentanspruch 1, **dadurch gekennzeichnet, dass** auf einem ersten Bereich und einem benachbartem zweiten Bereich eines langgestreckten bahnenförmigen flexiblen Körpers in Längsrichtung jeweils beabstandet zueinander jeweils mindestens eine Schicht wenigstens als Elektrode (2) aufgebracht wird, dass in einem dritten Bereich nach dem ersten und dem zweiten Bereich Öffnungen (5) als Separator (3) eingebracht werden, dass der dritte Bereich als Separator (3) mit dem Elektrolyt (4) auf dem zweiten Bereich und der erste Bereich auf den zweiten Bereich so geklappt, gefaltet, gefalzt, umgebogen oder umgeschlagen werden, dass die jeweilige Schicht wenigstens als Elektrode (2a, 2b) in Richtung des dritten Bereiches als Separator (3) weist, dass der so ausgebildete langgestreckte Körper quer zur Längsrichtung in Abschnitte als galvanische Elemente geteilt wird und dass die Abschnitte an den Schnittkanten durch Verbindungstechnologien verschlossen werden.

## Claims

1. Galvanic element with two carriers (1a and 1b) and two electrodes as well as at minimum one electrolyte in certain areas between the electrodes, **characterized in that** between the electrodes (2a, 2b) at least one area of a plate-shaped body with openings (5) acts as a separator (3) whereby
i. the plate-shaped body and the carriers (1a, 1b) for the electrodes (2a, 2b) make up a flexible body, that in succession a first area is the first carrier (1a), a second area the second carrier (1b) and a third area the separator (3) of the flexible body, that electrodes (2a, 2b) are located on one side of the flexible body and that the third area as the separator (3) is flapped, folded, welted, bent or turned down in the direction of the second area with the electrode (2b) and the first area is flapped, folded, welted, bent or turned down in direction of the second area with the electrode (2b), the separator (3) and the electrolyte (4) whereby
ii. the flexible body between the electrodes (2a, 2b) has at least one opening (9) such that in the flapped, folded, welted, bent or turned down state one area of the electrode (2b) of the second area is not covered and that the first area with the electrode (2a) protrudes the flapped, folded, welted, bent or turned down third area so that one area of this electrode (2a) is not covered.

2. Galvanic element according to patent claim 1, **characterized in that** the electrolyte (4) is restricted by at least one rib (8) provided with cement so that one galvanic element or several galvanic elements are realized whereby the rib (8) is a separate component or a component of the electrodes (2a, 2b).

3. Galvanic element according to at least one of the patent claims 1 or 2, **characterized in that** the flexible body is part of a long stretched-out sheet-like body whereby the areas are placed next to each other and across the longitudinal direction of the sheet-like body so that a separated section of the sheet-like body across the longitudinal direction is either the component of a galvanic element or it is a galvanic element when flapped, folded, welted, bent or turned down.

4. Galvanic element according to patent claim 1 **characterized in that** at least another area of the plate-like body not forming the separator (3) is an element carrier so that an electronic assembly group with at least one galvanic element has been realized.

5. Method to produce galvanic elements according to patent claim 1, **characterized in that** at least one layer is applied as an electrode (2) on a first area and an adjacent second area of a long stretched out, sheet-like flexible body in the longitudinal direction and with a space between them, that after the first and second area openings (5) are placed in a third area as a separator (3), that the third area as separator (3) with the electrolyte (4) is flapped, folded, welted, bent or turned down on the second area and the first area on the second area such that die respective layer points at least as an electrode (2a, 2b) in the direction of the third area as separator (3), that the long stretched-out body is divided across the longitudinal direction into sections as galvanic elements and that the sections are closed along the cutting edges using connection technologies.

## Revendications

1. Elément galvanique avec deux supports (1a, 1b) et deux électrodes ainsi qu'au moins un électrolyte au moins en partie entre les électrodes **caractérisé en ce qu'**entre les électrodes (2a, 2b) au moins une zone d'un corps en forme de plaque avec ouvertures (5) réalisées est placée comme séparateur (3),
i le corps en forme de plaque et les supports (1a, 1b) pour les électrodes (2a, 2b) étant un corps flexible qu'ensuite une première zone est le premier support (1a), une deuxième zone le deuxième support (1b) et une troisième zone le séparateur (3) respectivement du corps flexible, que les électrodes (2a, 2b) se trouvent d'un côté du corps flexible et que la troisième zone en tant que séparateur (3) est rabattue, pliée, repliée, recourbée ou courbée en direction de la deuxième zone avec l'électrode (2b) et la première zone en direction de la deuxième zone avec l'électrode (2b), le séparateur (3) et l'électrolyte (4),
ii. le corps flexible entre les électrodes (2a, 2b) présentant au moins une passage (9) de façon qu'à l'état rabattu, plié, replié, recourbé ou courbé, une zone de l'électrode (2b) de la deuxième zone ne soit pas couverte et que la première zone avec l'électrode (2a) dépasse la troisième zone rabattue, pliée, repliée, recourbée ou courbée de façon qu'une zone de cette électrode (2a) ne soit pas couverte.

2. Elément galvanique conformément à la revendication 1 **caractérisé en ce que** l'électrolyte (4) est limité par au moins une barre (8) pourvue de colle de façon qu'un élément galvanique ou plusieurs éléments galvaniques soient réalisés, la barre (8) étant une pièce séparée ou une partie des électrodes (2a, 2b).

3. Elément galvanique conformément à au moins l'une des revendications 1 ou 2 **caractérisé en ce que** le corps flexible est une partie d'un corps étiré dans sa longueur en forme de bande, les zones étant disposées juxtaposées transversalement par rapport à la direction longitudinale du corps en forme de bande de façon qu'une section séparée à l'état rabattu, plié, replié, recourbé ou courbé soit une partie d'un élément galvanique ou un élément galvanique.

4. Elément galvanique conformément à la revendication 1 **caractérisé en ce qu'**au moins une autre zone du corps en forme de plaque ne formant pas le séparateur (3) est un support d'élément de construction de façon qu'un organe électronique avec au moins un élément galvanique soit réalisé.

5. Procédé de fabrication d'éléments galvaniques selon la revendication 1 **caractérisé en ce que** sur une première zone et une deuxième zone voisine d'un corps flexible étiré en longueur en forme de bande respectivement à une distance l'une par rapport à l'autre, respectivement une couche est appliquée au moins comme électrode (2), que dans une troisième zone après la première et la deuxième zones, des ouvertures (5) sont réalisées en tant que séparateur (3), que la troisième zone est rabattue, pliée, repliée, recourbée ou courbée en tant que séparateur (3) avec l'électrolyte (4) sur la deuxième zone et la première zone sur la deuxième zone de façon que la couche respective montre au moins en tant qu'électrode (2a, 2b) dans la direction de la troisième zone en tant que séparateur (3), que le corps ainsi formé étiré en longueur transversalement par rapport à la direction longitudinale en sections en tant qu'éléments galvaniques et que les sections soient fermées aux bords de coupe par des technologies de raccordement.
